## Europäisches Patentamt
## European Patent Office
## Office européen des brevets

(19)

(11) Veröffentlichungsnummer: **0 125 428**
**A1**

(12) **EUROPÄISCHE PATENTANMELDUNG**

(21) Anmeldenummer: **84102972.1**

(22) Anmeldetag: **17.03.84**

(51) Int. Cl.³: **F 16 H 45/02**

(30) Priorität: **23.03.83 PC T/LU83/00086**

(43) Veröffentlichungstag der Anmeldung:
**21.11.84 Patentblatt 84/47**

(84) Benannte Vertragsstaaten:
**DE GB IT SE**

(71) Anmelder: **ZAHNRADFABRIK FRIEDRICHSHAFEN AKTIENGESELLSCHAFT**
**Löwentaler Strasse 100 Postfach 2520**
**D-7990 Friedrichshafen 1(DE)**

(72) Erfinder: **Boss, Franz**
**Bachstrasse 8/1**
**D-7993 Kressbronn(DE)**

(72) Erfinder: **Bieber, Gerold**
**Mühlengärten 7**
**D-7994 Langenargen(DE)**

(72) Erfinder: **Magg, Alfred**
**Albrechtstrasse 57**
**D-7990 Friedrichshafen 1(DE)**

(54) Hydrodynamische Baueinheit mit Überbrückungskupplung.

(57) Hydrodynamische Kupplung mit Überbrückungskupplung (12, 13, 18, 19). Die Trennfläche (4) zwischen Pumpe (1) und Glocke (2) und der Laufspalt (5) zwischen den Außenschalen (6, 7) von Pumpe (1) und Turbine (3) liegen im Bereich des größten Durchmessers des hydrodynamischen Kreislaufs. In diesem Bereich sind die Reibflächen der Überbrückungskupplung (12, 13, 18, 19) angeordnet. Vorteile sind die durch diese Anordnung bewirkte einfache Fertigung der Mitnahmeprofile (18, 19) für die Lamellen (12, 13) und der besonders leichte Zusammenbau an dieser übersichtlichen und zugänglichen Stelle.

FIG.1

EP 0 125 428 A1

ZAHNRADFABRIK FRIEDRICHSHAFEN
Aktiengesellschaft
Friedrichshafen                    /

Akte 5859 -- F
17.02.1983

Gegenstand der Erfindung ist eine hydrodynamische Einheit gemäß dem Oberbegriff aus Anspruch 1.

Die DE-PS 29 19 849 zeigt in Figur 1 eine derartige Einheit. Das Mitnahmeprofil für die antriebsseitigen Außenlamellen liegt im Bereich des Bodens der Glocke. Das Mitnahmeprofil für die abtriebsseitigen Innenlamellen liegt an der dem Glockenboden zugewandten Rückseite der Turbinenaußenschale. An beiden Stellen ist die Fertigung der Profile aufwendig und teuer. Am Glockenboden ist eine zusätzliche Scheibe als Anlagefläche für die Reiblamellen notwendig. Der Einbau der Lamellen an dieser Stelle erfordert erhöhte Geschicklichkeit und ist damit ebenfalls aufwendig und teuer. Die Reibkupplung wird geöffnet und geschlossen nur von hydrodynamischen Kräften, die sich aus dem Betriebszustand des Wandlers ergeben. Die Reibkupplung läuft daher oft und lange Zeit mit Reibschlupf. Das bedeutet Schwierigkeiten durch Überhitzung und Verschleiß der Reibflächen oder eine Überdimensionierung der Bauteile.

Die Aufgabe der Erfindung, die Herstellung und den Zusammenbau der Reibkupplung wesentlich einfacher und billiger zu gestalten, wird mit den kennzeichnenden Merkmalen des Anspruches 1 gelöst:

- Die Mitnahmeprofile für die Lamellen liegen an der Stirnseite der Glocke oder der Pumpe und der Turbine und damit an der günstigsten Stelle für alle Fertigungsverfahren. Ihre Herstellung wird daher sehr einfach und billig.

- Die Reibflächen liegen an der bestzugänglichen und übersichtlichsten Stelle. Der Zusammenbau der Kupplung ist daher sehr einfach und billig.

- Der wirksame Durchmesser der Reibflächen ist maximal.

Anspruch 2 bringt den weiteren Vorteil, daß mindestens eine antriebsseitige Außenlamelle entfällt.

Anspruch 3 fügt einen weiteren Vorteil hinzu: Durch seine günstige Gestalt und seine große Kolbenfläche benötigt der Kolben nur eine geringe Baulänge und einen geringen Betätigungsdruck.

ZAHNRADFABRIK FRIEDRICHSHAFEN
Aktiengesellschaft
Friedrichshafen

0125428

Akte 5859 - F

17.02.1983

Anspruch 4 ergibt zusätzlich einen Vorteil: Die zylindrische Mantelfläche des Füllpumpengehäuses, auf der der Ringkolben innen gleitet und dichtet, ist am Einzelteil einfach und billig zu fertigen, insbesondere dann, wenn ihr Durchmesser mit dem Zentrierdurchmesser in der Glocke übereinstimmt.

Eine Glocke nach Anspruch 5 ist in besonderem Maße einfach und billig zu fertigen. Sie wird durch die angrenzenden Bauteile gestützt und kann daher aus Druckguß hergestellt werden.

Anspruch 6 bedeutet noch weniger Aufwand und Kosten, weil die Fertigung eines besonderen Mitnahmeprofils für die antriebsseitigen Außenlamellen entfällt.

Anspruch 7 bringt den weiteren Vorteil, daß mindestens eine abtriebsseitige Innenlamelle entfällt.

In der Zeichnung werden Ausführungsbeispiele mit kennzeichnenden Merkmalen der Erfindung dargestellt. Es zeigt

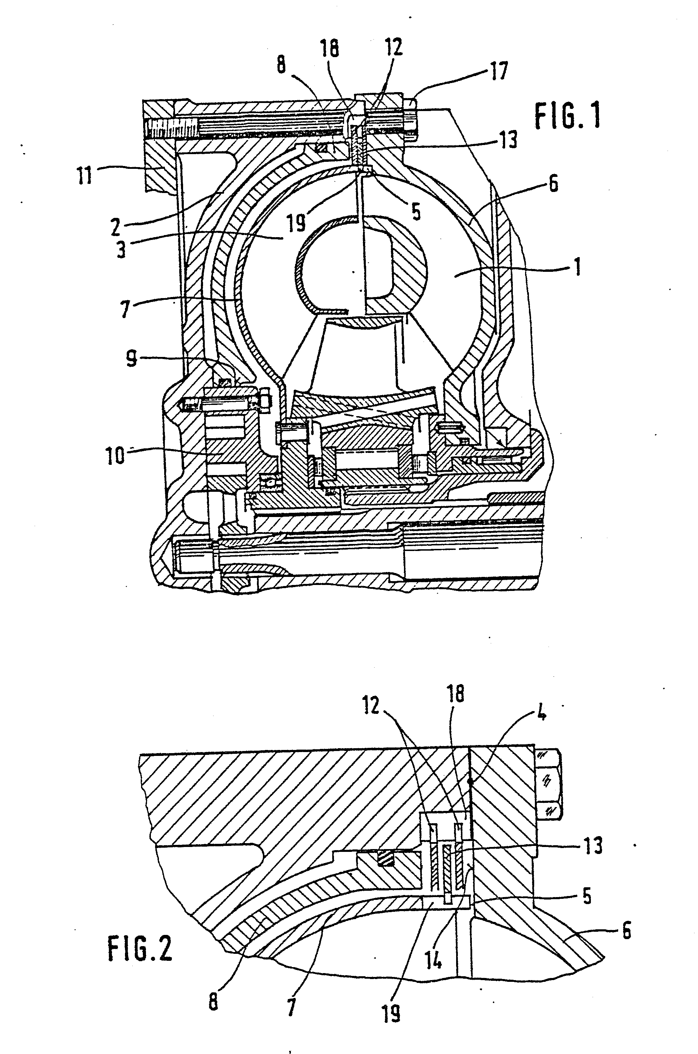

Fig. 1    einen Längsschnitt durch einen Wandler.

Fig. 2    einen vergrößerten Ausschnitt aus Fig. 1.

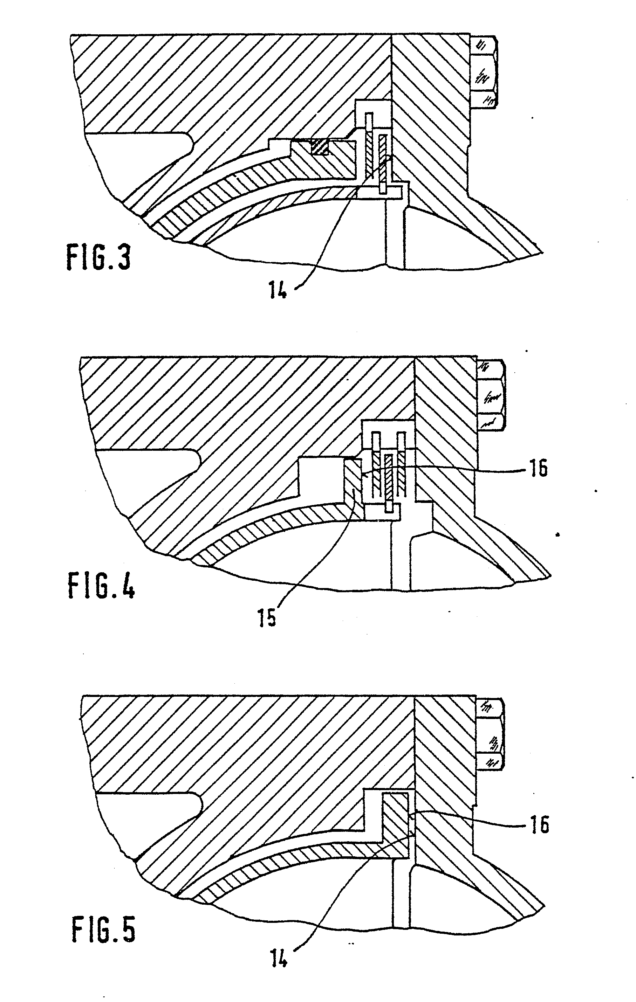

Fig. 3    den gleichen Ausschnitt, jedoch in anderer Ausführung.

Fig. 4    den gleichen Ausschnitt, jedoch in einer noch anderen Ausführung.

Fig. 5    noch einmal den gleichen Ausschnitt in einer weiteren Ausführung.

ZAHNRADFABRIK FRIEDRICHSHAFEN
Aktiengesellschaft
Friedrichshafen

*J*

0125428 -hg
Akte 5859 -- F
17.02.1983

Fig. 1 und 2

Die Pumpe 1 bildet mit der Glocke 2 zusammen das Pumpengehäuse. Befestigungselemente 17 verbinden Pumpe 1 und Glocke 2 unmittelbar mit der Drehmassenscheibe 11 einer nicht dargestellten
Antriebsmaschine. Die Glocke 2 hat an ihrer zur Teilfuge 4 gerichteten Stirnseite ein Mitnahmeprofil 18 für Reiblamellen 12.
Die Außenschale 7 der Turbine 3 hat an ihrer zum Laufspalt 5 gerichteten Stirnseite ein Mitnahmeprofil 19 für Lamellen 13. Ein
Kolben 8 gleitet und dichtet außen in der Glocke 2, innen auf der
Mantelfläche 9 des Füllpumpengehäuses 10.

Fig. 3

Die Stirnseite der Außenschale 6 der Pumpe 1 bildet eine
Reibfläche 14.

Fig. 4

Ein Flanschkragen 15 an der Stirnseite der Turbine 3 bildet
eine Reibfläche 16. Die Turbine 3 bildet den Kolben.

Fig. 5

Die Turbine 3 bildet den Kolben. Pumpe 1 und Turbine 3 bilden
die einzigen Reibflächen 14, 16.

ZAHNRADFABRIK FRIEDRICHSHAFEN
Aktiengesellschaft
Friedrichshafen

4

012 59428 hg
Akte 5859 -- F
17.02.1983

## Bezugszeichen

| | |
|---|---|
| 1 | Pumpe |
| 2 | Glocke |
| 3 | Turbine |
| 4 | Teilfuge |
| 5 | Laufspalt |
| 6 | Außenschale der Pumpe |
| 7 | Außenschale der Turbine |
| 8 | Kolben |
| 9 | Mantelfläche |
| 10 | Füllpumpengehäuse |
| 11 | Drehmassenscheibe |
| 12 | Reiblamelle |
| 13 | Reiblamelle |
| 14 | Reibfläche |
| 15 | Flanschkragen |
| 16 | Reibfläche |
| 17 | Befestigungselement |
| 18 | Mitnahmeprofil |
| 19 | Mitnahmeprofil |

ZAHNRADFABRIK FRIEDRICHSHAFEN
Aktiengesellschaft
Friedrichshafen

TZS/sz-hg
Akte 2 5428 - F
17.02.1983

## Hydrodynamische Einheit mit Überbrückungskupplung

## A n s p r ü c h e

1. Hydrodynamische Einheit mit einer Pumpe (1), die zusammen mit einer Glocke (2) ein axial geteiltes Pumpengehäuse (1, 2) bildet, einer Turbine (3) und einer hydrostatisch betätigten Kupplung (12, 13, 18, 19) zwischen Pumpe (1) und Turbine (3), deren ebene Reibflächen mit dem Pumpengehäuse (1, 2) und der Turbine (3) unmittelbar drehfest verbunden sind, dadurch   g e k e n n - z e i c h n e t ,   daß

- die Teilfuge (4) zwischen Pumpe (1) und Glocke (2) und der axiale Laufspalt (5) zwischen den Außenschalen (6, 7) von Pumpe (1) und Turbine (3) im wesentlichen in der gleichen Ebene liegen,

- die Reibflächen im Bereich der Teilfuge (4) und des Laufspaltes (5) angeordnet sind,

- eine Stirnfläche (14) der Teilfuge (4) eine Anlagefläche für die Reibflächen bildet.

2. Einheit nach Anspruch 1, dadurch   g e k e n n z e i c h - n e t ,   daß eine Stirnfläche (14) der Teilfuge (4) eine Reibfläche (14) bildet.

3. Einheit nach Anspruch 1 oder 2, dadurch   g e k e n n - z e i c h n e t ,   daß ein Kupplungskolben (8) der Turbinenaußenschale (7) in der Form weitgehend angepaßt ist.

4. Einheit nach Anspruch 3, dadurch   g e k e n n z e i c h - n e t ,   daß der Kolben (8) außen in der Glocke (2), innen auf einem Gehäuse (10) einer an der Glocke (2) befestigten Füllpumpe gleitet und dichtet.

5. Einheit nach einem der vorangehenden Ansprüche, dadurch
g e k e n n z e i c h n e t ,   daß
-    die Glocke (2) mit der Pumpe (1) zusammen unmittelbar an
     einer Drehmassenscheibe (11) einer Antriebsmaschine befestigt
     ist,
-    die Glocke (2) aus Druckguß hergestellt ist,
-    die Glocke (2) ein fertig gegossenes Mitnahmeprofil (18) für
     Reiblamellen (12) hat.

6. Einheit nach einem der vorangehenden Ansprüche, dadurch
g e k e n n z e i c h n e t ,   daß Befestigungselemente (17), die
Pumpe (1) und Glocke (2) miteinander verbinden, ein Mitnahmeprofil
für Reiblamellen (12) bilden.

7. Einheit nach einem der vorhergehenden Ansprüche, dadurch
g e k e n n z e i c h n e t ,   daß ein Flanschkragen (15) an der
Turbinenaußenschale (7) eine Reibfläche (16) bildet.

FIG.1

FIG.2

0125428

FIG.3

14

FIG.4

16

15

FIG.5

16

14

# EUROPÄISCHER RECHERCHENBERICHT

**0125428**
Nummer der Anmeldung

## EINSCHLÄGIGE DOKUMENTE

EP 84102972.1

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| X | <u>DE - B - 1 140 040</u> (DAIMLER-BENZ) <br> * Gesamt * | 1,2 | F 16 H 45/02 |
| X | <u>US - A - 2 943 516</u> (HERNDON) <br> * Gesamt * | 1-4,7 | |
| A | <u>DE - B2 - 2 263 835</u> (S.R.M. HYDROME KANIK) <br> * Gesamt * | 5 | |
| A | <u>DE - A - 1 550 957</u> (TAAKE) <br> * Gesamt * | | |
| A | <u>CH - A - 432 967</u> (FORSCHUNGSINSTI-TUT WILLEMS) <br> * Gesamt * <br> ---- | | |

**RECHERCHIERTE SACHGEBIETE (Int. Cl. ³)**

F 16 H 41/00

F 16 H 45/00

F 16 H 47/00

Der vorliegende Recherchenbericht wurde für alle Patentansprüche erstellt.

| Recherchenort | Abschlußdatum der Recherche | Prüfer |
|---|---|---|
| WIEN | 08-06-1984 | SCHATEK |